# EUROPÄISCHE PATENTSCHRIFT

(11) **EP 1 952 942 B1**
(45) Veröffentlichungstag und Bekanntmachung des Hinweises auf die Patenterteilung: **04.11.2009**
(21) Anmeldenummer: 08000898.0
(22) Anmeldetag: 18.01.2008
(51) Int. Cl.: B24B 5/04, B24B 27/00, B24B 41/00, B23Q 39/02

(54) **Werkzeugmaschine**
Machine tool
Machine-outil

(30) Priorität: 01.02.2007 DE 102007005846
(43) Veröffentlichungstag der Anmeldung: 06.08.2008
(73) Patentinhaber: EMAG Holding GmbH, 73084 Salach (DE)
(72) Erfinder: Hegener, Guido, Dr.-Ing., 71686 Remseck (DE); Schmitz, Roland, 71665 Vaihingen (DE)

(56) Entgegenhaltungen:
- EP-A- 1 175 963
- WO-A-99/61203
- WO-A-2006/063540
- DE-B3-102004 012 385

## Beschreibung

Die Erfindung betrifft eine Werkzeugmaschine zur Bearbeitung rotationssymmetrischer Werkstücke nach dem Oberbegriff des Anspruchs 1.

Eine derartige Werkzeugmaschine ist aus der WO 2006/063540A bekannt. Bei dieser bekannten Werkzeugmaschine zur Bearbeitung wellenförmiger Werkstücke mit mindestens einer an einer vorderen Wandfläche des Maschinengestells angeordneten vertikalen Werkstückspindel sind ein oder mehrere Werkzeugträger über Kreuzschlitten horizontal und vertikal bewegbar. Um die Sauberkeit der Werkzeugmaschine zu verbessern sind Werkstückspindel und Werkzeugträger hängend angeordnet. Aus der WO 2006/063540 A1 ist eine Drehmaschine mit zwei vertikalen Werkstückspindeln bekannt. Den Werkstückspindeln ist ein Werkzeugträger zugeordnet, der abwechselnd Werkstücke in der ersten und zweiten Werkstückspindel bearbeitet. Dadurch wird die Nebenzeit, in der keine Bearbeitung stattfindet, auf die Verfahrzeit zwischen den Werkstückspind.eln verkürzt. Nach einem ähnlichen Prinzip arbeitet auch die in der EP 1 175 963 A1 beschriebene Aussenrundschleifmaschine. Dabei ist eine Rundschleifeinheit auf einem Kreuzschlitten zwischen zwei Werkstückspindelstöcken angeordnet Auch bei dieser Maschine wird in einem Spindelstock ein fertig bearbeitetes Werkstück vermessen oder ausgewechselt, während in dem anderen Spindelstock ein Werkstück bearbeitet wird. Es kann alternativ auch eine kegelige Schleifscheibe eingesetzt werden, wobei die Achsen der Werkstückspindelstöcke gegenüber der Schleifspindelachse entsprechend geneigt sind. Bei Kurbelwellenschleifmaschine nach der WO 99/61203 A1 werden jeweils Werkstücke an einem Ende in einem Spannfutter gespannt und am anderen Ende abgestützt. Die Bearbeitung erfolgt durch Drehen, Fräsen oder Schleifen. Ein zugehöriges Verfahren sieht vor, im ersten Werkstückspindelstock einen Teil der Haupt- und Hublager zu bearbeiten, die Kurbelwelle um 180° gedreht im zweiten Werkstückspindelstock einzuspannen und dort den Rest der Haupt- und Hublager zu bearbeiten.

Es ist die Aufgabe der vorliegenden Erfindung, die Maschinennebenzeiten, in denen keine Werkstückbearbeitung erfolgt, zu verringern.
Diese Aufgabe wird gelöst durch eine Werkzeugmaschine mit den Merkmalen des Anspruchs 1. Vorteilhafte Weiterbildungen der Erfindung sind Gegenstand der Unteransprüche.

Bei der erfndungsgemäßen Werkzeugmaschine sind einer Werkzeugspindel mindestens zwei Werkstückspindeln zugeordnet. Während das Werkstück in der ersten Spindel bearbeitet wird, kann das fertig bearbeitete Werkstück in der zweiten Spindel gegen ein unbearbeitetes ausgewechselt werden. Da die Werkzeugspindel zwischen den Werkstückspindeln nur sehr kurze Wege zurücklegen muss, resultieren hieraus extrem kurze Maschinennebenzeiten. Bei dem gezeigten Ausführungsbeispiel sind die Werkstückspindeln mit wellenförmigen Werkstücken bestückt. Es können jedoch ebenso einseitig eingespannte Futterteile bearbeitet werden. Das Maschinengestell ist in Monoblockbauweise z.B. aus Polymerharzbeton hergestellt. Es kann aber auch als Guss- oder Schweißkonstruktion ausgeführt sein. Bei einer vorteilhaften Ausführung sind zusätzliche Werkzeugspindeln vorgesehen, so dass bei Bedarf an jeder der Werkstückspindeln eine Vierachsbearbeitung durchgeführt werden kann.

Weitere Besonderheiten und Vorzüge der Erfindung ergeben sich aus der folgenden Beschreibung eines Ausführungsbeispiels anhand der Zeichnungen, die eine Werkzeugmaschine mit zwei Werkstückspindeln zur Bearbeitung rotationssymmetrischer teile in schematischer Vorderansicht zeigen.

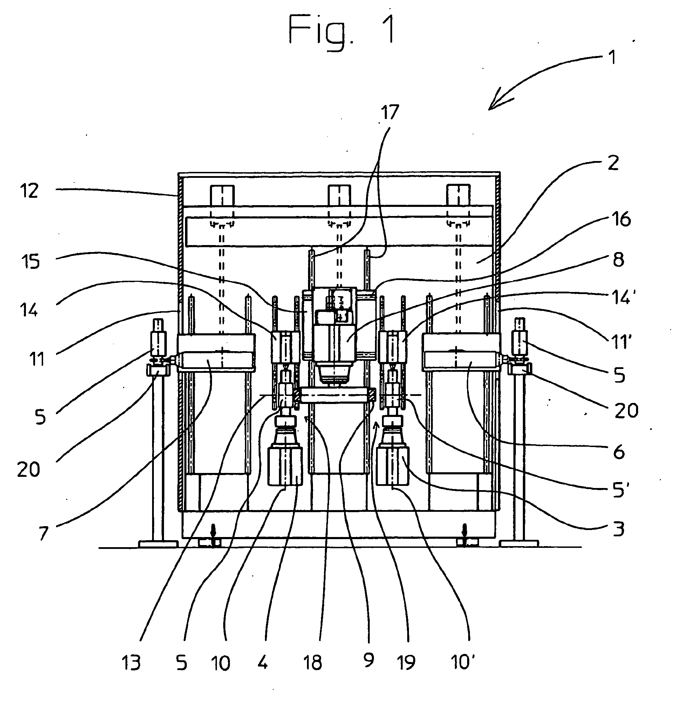

In einer nicht erfindungsgemäßen Ausführungsform, zeigt Fig. 1 die Werkzeugmaschine 1 mit zwei nebeneinander angeordneten vertikalen Werkstückspindeln 3, 4 zur Bearbeitung rotationssymmetrischer Werkstücke 5, 5'. Die Werkzeugmaschine 1 enthält ein formsteifes Maschinengestell mit einer vertikalen Wandfläche 2. Die seitlich voneinander beabstandeten Werkstückspindeln 3, 4 und die diesen zugeordneten Reitstöcke 14, 14' sind relativ zueinander verschieblich an der Wandfläche 2 angeordnet. Die ebenfalls vertikale Werkzeugspindel 8 trägt am unteren Ende ein als Schleifscheibe ausgeführtes Werkzeug 9. Sie ist auf dem Schlitten 15 auf horizontalen ersten Führungen 16 beweglich geführt. Der Schlitten 15 seinerseits ist entlang von vertikalen zweiten Führungen 17 an der vertikalen Wandfläche 2 verfahrbar. Die Werkzeugspindel 8 kann daher sowohl in Richtung der Rotationsachsen 10, 10' der Werkstückspindeln 3, 4 entlang von Führungen 17 als auch orthogonal zu den Rotationsachsen 10, 10' auf Führungen 16 verfahren werden. Daher können Werkstücke nach dem Längs- oder Schälschleif-, dem Einstechschleif- oder Pendelschleifverfahren bearbeitet werden.

Um das Werkzeug 9 von der ersten Arbeitsposition 18 in die zweite Arbeitsposition 19 zu bewegen, wird die Werkzeugspindel 8 entlang der Führungen 16 bewegt. Da der Verfahrweg se hr kurz ist, sind extrem kurze Maschinennebenzeiten, in denen keine Werkstückbearbeitung stattfindet, möglich.
Die Werkstücke 5, 5' werden der Werkzeugmaschine 1 über Transportbänder 20 zugeführt. Von dort werden sie durch Öffnungen 11, 11' in der Verkleidung 12 von den Werkstücktransporteinrichtungen 6, 7 ergriffen und in die Werkstückspindeln 3, 4 eingesetzt. Während das Werkstück 5 in der ersten Arbeitsposition 18 bearbeitet wird, kann das fertig bearbeitete Werkstück 5' in der zweiten Arbeitsposition 19 gegen ein unbearbeitetes ausgetauscht werden. Bei einer vorteilhaften Ausführung sind die Öffnungen 11, 11' in der Verkleidung 12 oberhalb der Bearbeitungsebene 13 angeordnet. Dadurch wird verhindert, dass während des Werkstückwechsels Kühlflüssigkeit oder Späne durch die Öffnungen 11, 11 ' nach außen gelangen.

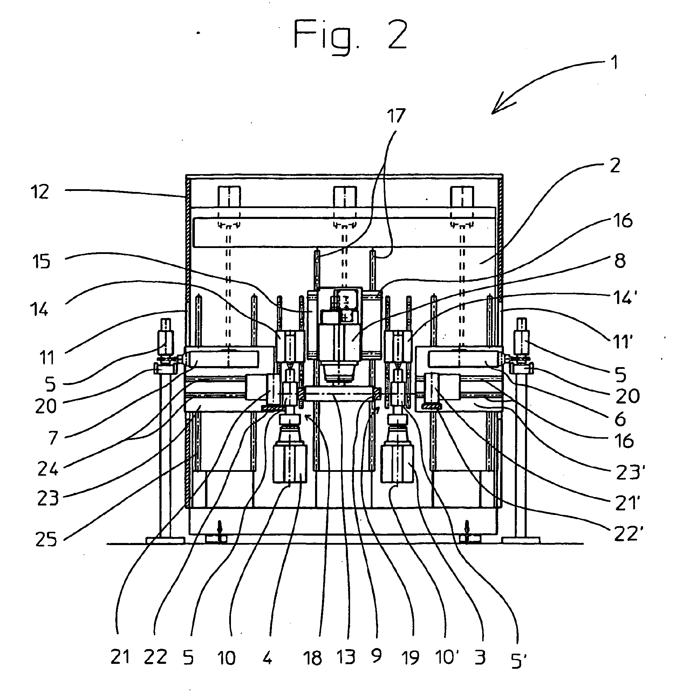

Fig. 2 zeigt die Werkzeugmaschine 1 nach Fig. 1 mit zusätzlichen Werkzeugspindeln 21, 21'. '. Diese sind auf Schlitten 23, 23' auf horizontalen Führungen 24 beweglich geführt. Die Schlitten 23, 23' sind ihrerseits entlang von vertikalen Führungen 25 an der vertikalen Wandfläche 2 verfahrbar. Bei Bedarf ist damit an jeder der Werkstückspindeln 3, 4 eine Vierachsbearbeitung möglich. Zum Beispiel können das Werkzeug 9 als Schrupp- und die Werkzeuge 22, 22' als Schlichtwerkzeuge ausgeführt sein.

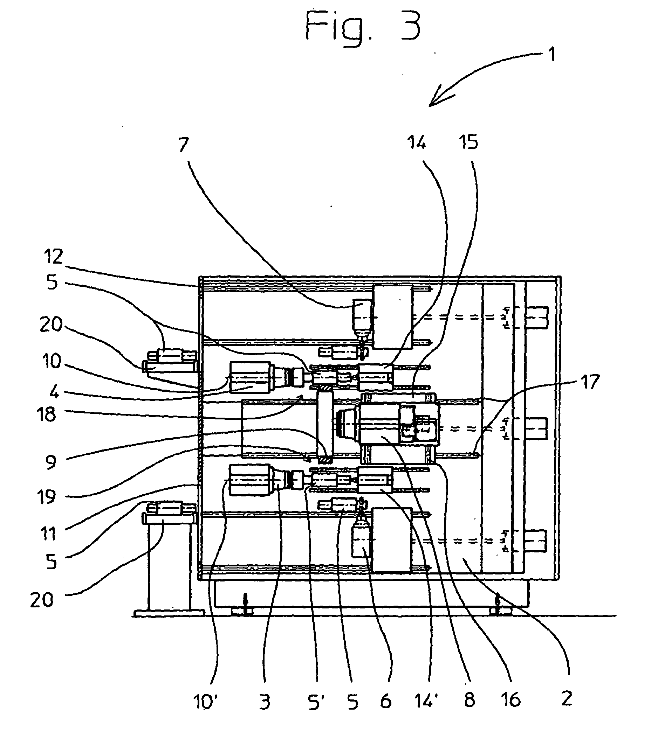

In einer nicht erfindungsgemäßen Ausführungsform, ist in Fig. 3 die Werkzeugmaschine 1 mit horizontalen Spindeln dargestellt. In Analogie zu Fig. 1 wurden die Bezugszeichen beibehalten. Die Werkstückspindel 4 ist oberhalb der Werkstückspindel 3 angeordnet. Zwischen beiden befindet sich die Werkzeugspindel 8. Um aus der Arbeitsposition 18 in die Arbeitsposition 19 zu wechseln, wird die Werkzeugspindel 8 auf dem Schlitten 15 entlang der Führungen 16 in vertikaler Richtung bewegt. Auf der linken Seite befinden sich die Förderbänder 20. Von dort werden die unbearbeiteten Werkstücke zugeführt und fertig bearbeitete abtransportiert.

### Bezugszeichen

- 1: Werkzeugmaschine
- 2: Wandfläche
- 3: Werkstückspindel
- 4: Werkstückspindel
- 5: 5' Werkstück
- 6: Werkstücktransporteinrichtung
- 7: Werkstücktransporteinrichtung
- 8: Werkzeugspindel
- 9: Werkzeug
- 10: 10' Rotationsachse
- 11: 11' Öffnung
- 12: Verkleidung
- 13: Bearbeitungsebene
- 14: 14' Reitstock
- 15: Schlitten
- 16: erste Führungen
- 17: zweite Führungen
- 18: erste Arbeitsposition
- 19: zweite Arbeitsposition
- 20: Förderband
- 21: 21' Werkzeugspindeln
- 22: 22' Werkzeug
- 23: 23' Schlitten
- 24: horizontale Führungen
- 25: vertikale Führungen

## Patentansprüche

1. Werkzeugmaschine (1) zur Bearbeitung rotationssymmetrischer Werkstüke mit mindestens zwei an einer vertikalen Wandfläche (2) angeordneten Werkstückspindeln (3, 4) zur Aufnahme der zu bearbeitenden Werkstücke (5, 5') mit mindestens zwei den Werkstückspindeln (3, 4) zugeordneten Werkstücktransporteinrichtungen (6, 7) zum selbsttätigen Be- und Entladen und mit mindestens einer Werkzeugspindel (8) zur Aufnahme rotatorisch antreibbarer Werkzeuge (9), wobei die Werkzeugspindel (8) durch alleiniges Verfahren in einer Bewegungsrichtung aus einer ersten Arbeitsposition (18), in welcher das von der ersten Werkstückspindel (4) gehaltene Werkstück (5) bearbeitbar ist, in eine zweite Arbeitsposition (19) verfahrbar ist, in welcher das von der zweiten Werkstückspindel (3) gehaltene Werkstück (5') bearbeitbar ist,
**dadurch gekennzeichnet,**
**dass** den Werkstückspindeln (3,4) zur Vierachsbearbeitung weitere Werkzeugspindeln (21, 21') zugeordnet sind und dass die weiteren Werkzeugspindeln (21, 21') auf Schlitten (23, 23') auf horizontalen Führungen (24) beweglich geführt sind und dass die Schlitten (23, 23') entlang von vertikalen Führungen (25) verfahrbar sind.

2. Werkzeugmaschine nach Anspruch 1, **dadurch gekennzeichnet, dass** die Werkzeugspindel (8) in einer Richtung orthogonal zu den Rotationsachsen (10, 10') der Werkstückspindeln (3, 4) verfahrbar ist.

3. Werkzeugmaschine nach Anspruch 1, **dadurch gekennzeichnet, dass** die Werkzeugspindel (8) in Richtung der Rotationsachsen (10, 10') der Werkstückspindeln (3, 4) verfahrbar ist.

4. Werkzeugmaschine nach Anspruch 1, **dadurch gekennzeichnet, dass** die Werkzeugspindel (8) sowohl in Richtung der Rotationsachse (10, 10') der Werkstückspindeln (3, 4) als auch in einer Richtung orthogonal zu den Rotationsachsen (10, 10') der Werkstückspindeln (3, 4) verfahrbar ist.

5. Werkzeugmaschine nach einem der Ansprüche 1 bis 4, **dadurch gekennzeichnet, dass** die Rotationsachsen (10, 10') der Werkstückspindeln (3, 4) und der Werkzeugspindel (8) in vertikaler Richtung angeordnet sind.

6. Werkzeugmaschine nach einem der Ansprüche 1 bis 4, **dadurch gekennzeichnet, dass** die Rotationsachsen (10, 10') der Werkstückspindelri (3, 4) und der Werkzeugspindel (8) in horizontaler Richtung angeordnet sind.

7. Werkzeugmaschine nach einem der Ansprüche 1 bis 6, **dadurch gekennzeichnet, dass** während der Bearbeitung eines Werkstücks (5) an der ersten Werkstückspindel (3) das Werkstück (5') in der zweiten Werkstückspindel (4) durch die Be- und Entladeeinrichtung (6) austauschbar ist.

8. Werkzeugmaschine nach einem der Ansprüche 1 bis 7, **dadurch gekennzeichnet, dass** das rotatorisch antreibbare Werkzeug (9) und/oder die Werkzeuge (22, 22') Schleifwerkzeuge sind.

9. Werkzeugmaschine nach Anspruch 5, wobei der Arbeitsraum durch eine Verkleidung (12) nach außen gegen Austritt von Spänen und/oder Kühlflüssigkeit abgedichtet ist, und wobei die Werkstücke (5, 5') zum Be- und Entladen der Wericstückspindeln (3, 4) durch Öffnungen (11, 11') in der Verkleidung (12) bewegt werden, **dadurch gekennzeichnet, dass** die Öffnungen (12) oberhalb der Bearbeitungsebene (13) angeordnet sind.

## Claims

1. Machine tool (1) for machining rotationally symmetrical workpieces, comprising at least two work spindles (3, 4) arranged on a vertical wall surface (2) for accommodating the workpieces (5, 5') to be machined, comprising at least two work transport devices (6, 7) assigned to the work spindles (3, 4) for automatic loading and unloading and comprising at least one tool spindle (8) for accommodating rotationally drivable tools (9), wherein the tool spindle (8), by sole traverse in one direction of movement, can be traversed from a first working position (18) in which the workpiece (5) held by the first work spindle (4) can be machined into a second working position (19) in which the workpiece (5') held by the second work spindle (3) can be machined, **characterized in that** further tool spindles (21, 21') are assigned to the work spindles (3, 4) for multi-axis machining, and **in that** the further tool spindles (21, 21') are movably guided on slides (23, 23') on horizontal guides (24), and **in that** the slides (23, 23') are traversable along vertical guides (25).

2. Machine tool according to Claim 1, **characterized in that** the tool spindle (8) is traversable in a direction orthogonal to the rotation axes (10, 10') of the work spindles (3, 4).

3. Machine tool according to Claim 1, **characterized in that** the tool spindle (8) is traversable in the direction of the rotation axes (1.0, 10') of the work spindles (3, 4).

4. Machine tool according to Claim 1 , **characterised in that** the tool spindle (8) is traversable both in the direction of the rotation axes (10, 10') of the work spindles (3, 4) and in a direction orthogonal to the rotation axes (10, 10') of the work spindles (to, 4).

5. Machine tool according to one of Claims 1 to 4, **characterized in that** the rotation axes (10, 10') of the work spindles (3, 4) and of the tool spindle (8) are arranged in the vertical direction.

6. Machine tool according to one of Claims 1 to 4, **characterized in that** the rotation axes (10, 10') of the work spindles (3, 4) and of the tool spindle (8) are arranged in the horizontal direction.

7. Machine tool according to one of Claims 1 to 6, **characterized in that**, during the machining of a workpiece (5) on the first work spindle (3), the workpiece (5') in the second work spindle (4) can be exchanged by the loading and unloading device (6).

8. Machine tool according to one of Claims 1 to 7, **characterized in that** the rotationally drivable tool (9) and/or the tools (22, 22') are grinding tools.

9. Machine tool according to Claim 5, wherein the work space is sealed by means of a panelling (12) to the outside against the escape of chips and/or cooling liquid, and wherein the workpieces (5, 5') are moved through openings (11, 11') in the panelling (12) for loading and unloading the work spindles (3, 4), **characterized in that** the openings (11, 11') are arranged above the machining plane (13).

## Revendications

1. Machine-outil (1) pour l'usinage de pièces à symétrie de révolution, avec au moins deux broches porte-pièces (3, 4) disposées sur une surface de paroi verticale (2), pour recevoir les pièces à usiner (5, 5'), avec au moins deux dispositifs de transport de pièces (6, 7) associés aux broches porte-pièces (3, 4), pour le chargement et le déchargement automatiques, et avec au moins une broche porte-outil (8) pour recevoir des outils (9) pouvant être entraînés en rotation, la broche porte-outil (8) pouvant être déplacée par simple translation dans une direction de déplacement depuis une première position de travail (18), dans laquelle la pièce (5) maintenue par la première broche porte-pièce (4) peut être usinée, jusqu'à une deuxième position de travail (19) dans laquelle la pièce (5') maintenue par la deuxième broche porte-pièce (3) peut être usinée,
**caractérisée en ce que**
l'on associe aux broches porte-pièces (3, 4), pour l'usinage suivant quatre axes, d'autres broches porte-outils (21, 21') et **en ce que** les autres broches porte-outils (21, 21') sont guidées de manière mobile sur des chariots (23, 23') sur des guides horizontaux (24), et **en ce que** les chariots (23, 23') peuvent être déplacés le long de guides verticaux (25).

2. Machine-outil selon la revendication 1, **caractérisée en ce que** la broche porte-outil (8) peut être déplacée dans une direction perpendiculaire aux axes de rotation (10, 10') des broches porte-pièces (3, 4).

3. Machine-outil selon la revendication 1., **caractérisée en ce que** la broche porte-outil (8) peut être déplacée dans la direction des axes de rotation (10, 10') des broches porte-pièces (3, 4) .

4. Machine-outil selon la revendication 1, **caractérisée en ce que** la broche porte-outil (8) peut être déplacée à la fois dans la direction des axes de rotation (10, 10') des broches porte-pièces (3, 4) et dans une direction perpendiculaire aux axes de rotation (10, 10') des broches porte-pièces (3, 4).

5. Machine-outil selon l'une quelconque des revendications 1 à 4, **caractérisée en ce que** les axes de rotation (10, 10') des broches porte-pièces (3, 4) et de la broche porte-outil (8) sont disposés dans la direction verticale.

6. Machine-outil selon l'une quelconque des revendications 1 à 4, **caractérisée en ce que** les axes de rotation (10, 10') des broches porte-pièces (3, 4) et de la broche porte-outil (8) sont disposés dans la direction horizontale.

7. Machine-outil selon l'une quelconque des revendications 1 à 6, **caractérisée en ce que** pendant l'usinage d'une pièce (5) sur la première broche porte-pièce (3), la pièce (5') dans la deuxième broche porte-pièce (4) peut être remplacée par le dispositif de chargement et de déchargement (6).

8. Machine-outil selon l'une quelconque des revendications 1 à 7, **caractérisée en ce que** l'outil (9) pouvant être entraîne en rotation et/ou les outils (22, 22') sont des outils de meulage.

9. Machine-outil selon la revendication 5, dans laquelle l'espace de travail est étanché vis-à-vis de l'extérieur par un revêtement (12), pour éviter la sortie de copeaux et/ou de liquide de refroidissement, et les pièces (5, 5') sont déplacées, pour le chargement et le déchargement des broches porte-pièces (3, 4) à travers des ouvertures (11, 11') dans le revêtement (12), **caractérisée en ce que** les ouvertures (11, 11') sont disposées au-dessus du plan d'usinage (13).
